# EUROPEAN PATENT APPLICATION

(11) **EP 1 258 570 A2**
(43) Date of publication of application: **20.11.2002**
(21) Application number: 02010839.5
(22) Date of filing: 15.05.2002
(51) Int. Cl.: E03D 3/02

(54) **Dual-purpose feed device for lavatory flush tanks**

(30) Priority: 16.05.2001 IT MI20011006
(71) Applicant: VALSIR S.p.A., 25078 Vestone (BS) (IT)
(72) Inventor: Varotti, Mario, 25078 VESTONE (IT); Ferreira, Francisco, 25078 VESTONE (IT)
(74) Representative: Cerbaro, Elena

(57) **Abstract**

There is provided a dual-purpose feed device (1) having two distinct, interchangeable valve assemblies (11, 12), one a diaphragm type and the other a piston type, for withstanding different operating pressures; the valve assemblies (11, 12) are selectively insertable inside a seat (3) on the device, and are activated by the same shutter member (30) controlled by a float (31).

## Description

The present invention relates to a dual-purpose feed device for flush tanks.

As is known, flush tanks are fitted with feed devices for filling the tank after each flush; and inflow is cut off by a float, which, once a given level is reached in the tank, closes a valve on the feed device.

Two main types of feed devices are known, one with a piston valve, and the other with a diaphragm valve. Piston valves are relatively straightforward and cheap, but are unsuitable for mains pressures over 16 bars, which call for relatively more complex, more expensive diaphragm valves (also known as counterpressure valves). Depending on requirements, a feed device with one type of valve or the other is therefore installed.

At present, feed devices of the above two types are produced differently with practically no component parts in common, thus resulting in relatively high production and distribution costs. Moreover, should the installed feed device later prove unsuitable, e.g. due to changing operating conditions, the whole device must be replaced.

It is an object of the present invention to provide a flush tank feed device designed to eliminate the aforementioned drawbacks of the known state of the art, and which, in particular, is cheap and easy to produce, and can be used, with only minor alterations, on both high- and low-pressure water mains.

According to the present invention, there is provided a dual-purpose feed device for lavatory flush tanks, as claimed in Claim 1.

The device according to the invention is cheap and easy to produce, and can be used in two versions suitable for different mains pressures, so that one basic device can be used for two different applications with no complex, major alterations involved. One valve assembly can be replaced with the other quickly and easily, both during and after installation, alongside changing mains conditions, without replacing the whole device, thus greatly reducing production and distribution costs.

A non-limiting embodiment of the present invention will be described by way of example with reference to the accompanying drawings, in which:
Figure 1 shows an overall view in perspective of a feed device in accordance with the invention;
Figure 2 shows an exploded view of some of the component parts of the Figure 1 device;
Figures 3 and 4 show schematic longitudinal sections of some of the component parts in Figure 2.

With reference to the accompanying drawings, a dual-purpose feed device 1 for lavatory flush tanks comprises a casing 2 having an inner seat 3 for housing a valve assembly as described later on. Seat 3 communicates with an inlet conduit 4 connectable to an external water mains, and with an outlet conduit 5 substantially perpendicular to inlet conduit 4 and connected to an outflow pipe 6.

Device 1 comprises a first so-called diaphragm valve assembly 11, and a second so-called piston valve assembly 12, which are interchangeable and designed to withstand different operating pressures. Valve assemblies 11, 12 comprise respective bodies 13, 14 shaped so that either can be inserted inside seat 3 and interposed between inlet conduit 4 and outlet conduit 5. Device 1 also comprises fastening means 15, which cooperate with body 13 or 14 to secure respective valve assembly 11 or 12 inside seat 3; and control means 16 for selectively activating valve assembly 11 or 12 housed inside seat 3.

Seat 3 is formed at an open end 17 of casing 2, is substantially cylindrical, and comprises a radially inner lateral surface 18 and a concave end wall 19. A central tubular conduit 20 projects axially inside seat 3 from end wall 19, communicates with inlet conduit 4, and terminates inside seat 3 with an annular end edge 21. End wall 19 is connected to lateral surface 18 by an annular step or shoulder 22; and the concave portion of end wall 19 has a passage (not shown) communicating with outlet conduit 5.

Fastening means 15 comprise an internally threaded ring nut 25, which engages a corresponding external thread 26 on end 17 of casing 2, and has a central through opening 27 defined by a flange 28.

Control means 16 comprise a movable shutter member 30 connected mechanically to a float 31 mounted to slide along outflow pipe 6. Shutter member 30 is in the form of an axially sliding piston, and comprises, at opposite longitudinal ends, a sealing portion 32 (e.g. defined by a pad of polymer material), and a connecting portion 33 for articulated connection to a first arm 34 of a rocking lever 35. Lever 35 is hinged to a supporting member 36 fixed to casing 2 and comprising a cylindrical body through which shutter member 30 extends. Supporting member 36 also comprises a radially outer collar 37 for connection to casing 2 by means of ring nut 25; and lever 35 comprises a second arm 38, a free end 39 of which is clicked on to a head 40 of an adjustable rod 41 connected to float 31.

Bodies 13, 14 are shaped so as to be interchangeable inside seat 3. More specifically, each body 13, 14 is a cup-shaped, disk-shaped body having an end wall 45 and a substantially cylindrical lateral wall 46; and end wall 45 has a central through hole 47 through which shutter member 30 is inserted and slides axially. More specifically, hole 47 is formed through end wall 45, and is defined by a tubular projection 49 projecting axially from end wall 45, on the opposite side to lateral wall 46, and terminating with an annular edge 50. Each body 13, 14 also comprises a radially outer peripheral edge 51 for connection to lateral surface 18 of seat 3, and which comprises circumferentially spaced radial projections 52 for engaging respective recesses 53 formed in lateral surface 18. At the axial end opposite the end connected to end wall 45, lateral wall 46 has an annular front edge 54 which rests axially on annular shoulder 22 of seat 3.

Bodies 13, 14 of valve assemblies 11, 12 are therefore identical and interchangeable inside seat 3, whereas valve assemblies 11, 12 differ as follows.

Valve assembly 11 comprises a flexible, disk-shaped diaphragm 60 carried by body 13; and a counterpressure chamber 61 formed inside body 13, between diaphragm 60 and end wall 45, and of which central through hole 47 in end wall 45 forms a relief hole. Diaphragm 60 comprises an annular, axially projecting central portion 62, which cooperates in fluidtight manner with end edge 21 of tubular conduit 20; a projecting, radially outer peripheral edge 64 inserted in fluidtight manner inside an annular groove 65 formed in end wall 45; and a connecting portion 66 connecting central portion 62 and peripheral edge 64, and defining a flexible hinge.

Diaphragm 60 also comprises a tubular push-rod 67 fitted through a central hole in diaphragm 60, and having an inner axial through hole 68. An externally threaded rod 69 is inserted inside axial hole 68 and, together with an inner lateral wall of axial hole 68, defines a helical channel allowing water to flow from one side of diaphragm 60 to the other. Outside counterpressure chamber 61, rod 69 has an end head 70, which rests axially on an axial end edge 71 of push-rod 67 by means of a supporting foot 72; and a perforated cap 73 is fitted coaxially on to the outside of push-rod 67 to cover end head 70.

Body 14 of valve assembly 12 comprises a perforated partition 75 substantially facing end wall 45, on the opposite side to tubular projection 49, and connected integrally by its radially outer peripheral edge to lateral wall 46; and a chamber 76 is defined inside body 14, between end wall 45 and partition 75. Body 14 also comprises a central tubular portion 77 projecting axially from partition 75, on the opposite side to end wall 45, and communicating with chamber 76 at an axial end having an opening 78 defined by an annular edge 79. Partition 75 has a number of through openings 80 arranged in a ring about tubular portion 77; and tubular portion 77 has an O-ring-type outer sealing ring 81.

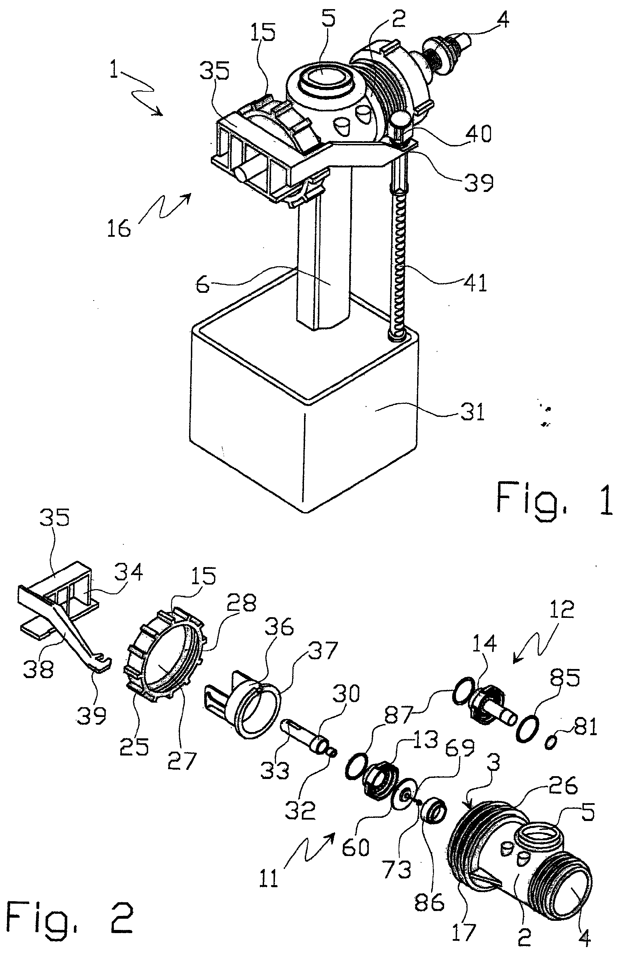

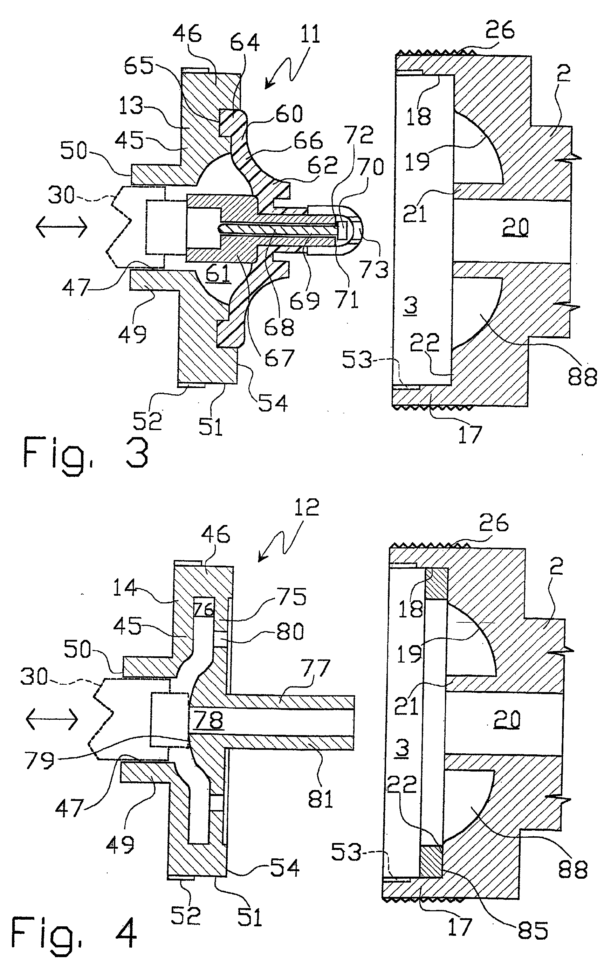

Either of valve assemblies 11, 12 can be fitted interchangeably to device 1, depending on requirements. The corresponding body 13, 14 is inserted inside seat 3 with front edge 54 resting against shoulder 22 - possibly with the interposition of a sealing ring 85 (Figure 4) and/or a disk-shaped adapter 86 (Figure 2) - and with radial projections 52 engaging recesses 53; body 13, 14 is then locked inside seat 3 by means of ring nut 25, with the interposition of supporting member 36 and a sealing ring 87 (Figure 2); and an annular conduit 88 (Figures 3 and 4) is defined inside seat 3, between body 13, 14 and end wall 19, and communicates (via said passage not shown) with outlet conduit 5.

If valve assembly 11 is fitted, central portion 62 of diaphragm 60 rests in fluidtight manner against end edge 21 of tubular conduit 20, and device 1 operates in substantially the same way as similar known devices with diaphragm valves. That is, when the tank is full of water, float 31 keeps shutter member 30 in the closed position closing hole 47, i.e. the relief hole of counterpressure chamber 61, which constitutes the control orifice of valve assembly 11. The water from inlet conduit 4, after flowing along tubular conduit 20 and push-rod 67, fills counterpressure chamber 61, and, by exerting a higher pressure than that in tubular conduit 20, keeps central portion 62 of diaphragm 60 in contact with end edge 21, thus preventing water from flowing from tubular conduit 20 to outlet conduit 5. When the tank is emptied, float 31 moves down, thus opening hole 47; the pressure of the water in tubular conduit 20 is now greater than that in counterpressure chamber 61, and therefore detaches central portion 62 from end edge 21, thus allowing water to flow from tubular conduit 20 (i.e. from inlet conduit 4) to annular conduit 88, and from there to outlet conduit 5.

An important aspect of the invention is that, along hole 68 in push-rod 67, water flows spirally into counterpressure chamber 61 along the helical channel defined between the thread of rod 69 and the inner lateral wall of hole 68, thus greatly reducing the noise level.

If valve assembly 12 is fitted, tubular portion 77 is inserted inside tubular conduit 20, and shutter member 30, inserted through hole 47, opens/closes opening 78, which constitutes the control orifice of valve assembly 12. When the tank is full, float 31 keeps shutter member 30 in the closed position closing opening 78, thus preventing water from flowing in. When float 31 moves down, shutter member 30 opens opening 78 to let water in. The water from inlet conduit 4 flows along tubular portion 77 and through chamber 76 and openings 80 to annular conduit 88, and from there to outlet conduit 5. An important aspect of the invention is that the water from inlet conduit 4 first flows along central tubular portion 77, and then back through openings 80 before reaching outlet conduit 5, thus greatly reducing the noise level of device 1 when filling the tank.

Clearly, changes may be made to the device as described and illustrated herein without, however, departing from the scope of the present invention.

## Claims

1. A dual-purpose feed device (1) for lavatory flush tanks, the device comprising a casing (2) having an inner seat (3); a valve assembly (11, 12) housed inside the seat; fastening means (15) for securing the valve assembly inside the seat; and control means (16) for activating the valve assembly by means of a float (31); the device being **characterized by** comprising a first and a second valve assembly (11, 12) interchangeable with each other; said valve assemblies comprising respective bodies (13, 14) shaped so as to be selectively insertable inside said seat (3) and securable inside said seat by said fastening means (15).

2. A device as claimed in Claim 1, **characterized in that** said seat (3) communicates with an inlet conduit (4) connectable to an external water mains, and with an outlet conduit (5); said valve assemblies (11, 12) being insertable inside said seat (3) so as to be interposed between the inlet conduit and the outlet conduit.

3. A device as claimed in Claim 1 or 2, **characterized in that** said seat (3) is substantially cylindrical; and said bodies (13, 14) are disk-shaped bodies having respective radially outer peripheral edges (51) for connection to a radially inner lateral surface (18) of said seat (3).

4. A device as claimed in Claim 3, **characterized in that** said peripheral edges (51) have radial projections (52) for engaging respective recesses (53) formed in said lateral surface (18).

5. A device as claimed in one of the foregoing Claims, **characterized in that** said control means (16) comprise a shutter member (30) connected to said float (31); said bodies (13, 14) having respective control holes (47, 78) closable by said shutter member.

6. A device as claimed in Claim 5, **characterized in that** said bodies (13, 14) are cup-shaped, disk-shaped bodies, and have respective holes (47) formed through respective end walls (45) of said bodies, and through which said shutter member (30) is insertable and slides axially.

7. A device as claimed in Claim 6, **characterized in that** said first valve assembly (11) is a diaphragm valve assembly, and said second valve assembly (12) is a piston valve assembly; said first and said second valve assembly (11, 12) withstanding different operating pressures.

8. A device as claimed in Claim 7, **characterized in that** said first valve assembly (11) comprises a first body (13); a flexible diaphragm (60) carried by said first body (13); and a counterpressure chamber (61) formed in said first body (13), between said diaphragm (60) and the end wall (45) of said first body (13); said control hole (47) being a relief hole of the counterpressure chamber, formed centrally through said end wall (45).

9. A device as claimed in Claim 8, **characterized in that** said first valve assembly (11) also comprises a tubular push-rod (67) fitted centrally through said diaphragm (60) and having an inner through axial hole (68); and an externally threaded rod (69) inserted inside said axial hole (68) and defining, with an inner lateral wall of said axial hole, a helical channel allowing water to flow from one side of the diaphragm (60) to the other.

10. A device as claimed in Claim 9, **characterized in that** said rod (69) has an end head (70) resting axially on an axial end edge (71) of said push-rod (67) by means of a supporting foot (72); a perforated cap (73) being fitted coaxially on the outside of said push-rod (67) to cover said end head (70).

11. A device as claimed in Claim 7, **characterized in that** said second valve assembly (12) comprises a second body (14) having an inner chamber (76); said chamber (76) having a first opening (78) communicating with the inlet conduit (4), and at least one second opening (80) communicating with the outlet conduit (5); said control hole closable by said shutter member (30) being defined by said first opening (78).

12. A device as claimed in Claim 11, **characterized in that** said chamber (76) is defined between the end wall (45) of said second body (14) and a perforated partition (75) substantially facing said end wall (45), to close said chamber (76), and having said at least one second opening (80); said second body (14) also comprising a central tubular portion (77), which projects axially from said partition (75), on the opposite side to the end wall (45), and has an axial end terminating inside said chamber (76) and having said first opening (78).

13. A device as claimed in Claim 12, **characterized in that** said partition (75) has a number of second openings (80) formed through the partition and arranged in a ring about said central tubular portion (77).
